(19) Europäisches Patentamt
European Patent Office
Office européen des brevets

(11) **EP 4 507 503 B1**

(12) **FASCICULE DE BREVET EUROPEEN**

(45) Date de publication et mention de la délivrance du brevet:
**08.10.2025 Bulletin 2025/41**

(21) Numéro de dépôt: **23717156.6**

(22) Date de dépôt: **05.04.2023**

(51) Classification Internationale des Brevets (IPC):
***A23D 9/007*** *(2006.01)* ***A23L 33/115*** *(2016.01)*
***A23L 33/155*** *(2016.01)*

(52) Classification Coopérative des Brevets (CPC):
**A23L 33/115; A23D 9/007; A23L 33/155**

(86) Numéro de dépôt international:
**PCT/EP2023/058995**

(87) Numéro de publication internationale:
**WO 2023/198557 (19.10.2023 Gazette 2023/42)**

(54) **COMPOSITION HUILEUSE ALIMENTAIRE CONTENANT DU 7-DESHYDROCHOLESTEROL, DE LA PREVITAMINE D3 ET DE LA VITAMINE D3 - PRODUITS ASSOCIES**

ÖLIGE DIÄTZUSAMMENSETZUNG MIT 7-DEHYDROCHOLESTEROL, PRÄVITAMIN D3 UND VITAMIN D3 - ASSOZIIERTEN PRODUKTEN

DIETARY OILY COMPOSITION CONTAINING 7-DEHYDROCHOLESTEROL, PREVITAMIN D3 AND VITAMIN D3 - ASSOCIATED PRODUCTS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.04.2022 FR 2203409**

(43) Date de publication de la demande:
**19.02.2025 Bulletin 2025/08**

(73) Titulaire: **Nutri'Earth**
**62220 Carvin (FR)**

(72) Inventeurs:
- **DEFRIZE, Jérémy**
**59320 Hallennes les Haubourdin (FR)**
- **DORMIGNY, Thomas**
**62410 Meurchin (FR)**
- **DESTAILLEUR, Charles-Antoine**
**62840 Sailly sur La Lys (FR)**

(74) Mandataire: **RVDB**
**85 Place Marmottan**
**BP 30247**
**62405 Béthune Cedex (FR)**

(56) Documents cités:
**WO-A1-03/059358**
**WO-A1-2006/056679**
**WO-A1-2021/191510**
**FR-A1- 3 081 287**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 507 503 B1

## Description

### *Domaine technique*

La présente invention concerne des compositions huileuses comestibles qui contiennent de la vitamine D3.

### *Etat de la technique*

La vitamine D3 est couramment extraite de la lanoline ou du lichen.

L'extraction à partir de la lanoline ou du lichen nécessite l'usage de solvants. La vitamine D3 extraite de la lanoline ou du lichen est ensuite mélangée à une huile végétale qui est fréquemment de l'huile de colza.

Dans les deux cas, les solvants restent au moins à l'état de trace dans le produit fini.

Les compositions huileuses de vitamine D3 précitées ne sont pas toujours bien assimilées par les mammifères, en particulier l'humain.

Elles sont également fragiles du fait de l'oxydation des lipides, notamment insaturés avec l'oxygène de l'air. La lumière dégrade également fortement ces huiles en créant des espèces activées (radicaux libres) lesquelles engendrent des réactions en chaine d'oxydation parfois autocatalysées dans l'huile.

En effet, les UV (A, B et C) sont connus pour former des radicaux libres qui donnent lieu à des réactions chimiques en chaîne autoalimentées. Lorsque ces compositions sont soumises à la lumière, elles s'altèrent très rapidement même si elles sont ensuite conservées à l'obscurité, du fait de la formation rapide d'espèces activées (radicaux libres).

Un but de la présente invention est de proposer une nouvelle composition huileuse contenant de la vitamine D3 qui présente une bonne absorption par l'organisme et/ou qui présente une concentration en vitamine D3 plus stable dans le temps que les compositions huileuses contenant de la vitamine D3 extraite de la lanoline et/ou du lichen. WO 2021/191510 A1 décrit un procédé de préparation d'une poudre de coléoptères. La fraction huileuse contient de la vitamine D3 et la poudre de coléoptères est enrichie en vitamine D3 par un traitement ultraviolet.

WO 03/059358 A1 décrit une composition d'huile comprenant une huile et de la 25-hydroxy vitamine D3.

### *Résumé de l'invention*

La présente invention concerne une composition huileuse alimentaire contenant de la vitamine D3, du 7-déshydrocholestérol et de la prévitamine D3. De manière caractéristique, selon l'invention, elle contient une quantité de 7-déshydrocholestérol pour 100g de composition égale ou supérieure à 5mg ; 10mg, 15 mg, 20mg ; 21mg ; 22mg ; 23mg ; 23,5mg, 24mg, 24,5mg ou 25mg.

Une telle huile présente une teneur en vitamine D3 stable dans le temps. En effet, comme elle contient de la prévitamine 3 et du 7-déshydrocholestérol, ces deux composés peuvent *in situ* se transformer en vitamine D3, remplaçant ainsi la vitamine D3 dégradée, notamment par oxydation. Sans que la Demanderesse ne soit liée à l'explication qui suit, la réaction de réarrangement qui conduit à la formation de vitamine D3 à partir de la provitamine D3 n'a semble-t-il pas été très bien étudiée ; il s'agit probablement d'une réaction réversible conduisant à un équilibre, dont la cinétique et les concentrations des espèces à l'équilibre dépendent du milieu dans lequel elle a lieu. Ainsi, la valeur précitée de 7-déshydrocholestérol dans une composition huileuse alimentaire permet une bonne conservation de la composition dans le temps et/ou favorise son absorption, notamment chez les mammifères.

La quantité de 7-déshydrocholestérol pour 100g de composition peut être inférieure ou égale à 26mg, 27mg, 28mg, 29mg ou 30mg.

Avantageusement, la composition présente un indice de peroxyde inférieur à 4, en particulier inférieur ou égal à 2,5 ; 2,4 ; 2,3 ; 2,2 ; 2,1 ;2 ;1,9 ; 1,8 ; 1,7 ; 1,6 ; 1,5 ; 1,4 ; 1,3 ; 1,2 ; 1,15, ou 1,10 et/ou un indice d'anisidine inférieur ou égal à 1,1 ; 1,07 ; 1,05 ; 1,02 ; 1,00 ; 0,97 ; 0,95 ; 0,90 ; 0,87 ; 0,85 ; 0,82 ; 0,80 ; 0,77 ; 0,75 ; 0,72 ; 0,70 ; 0,67 ; 0,65 ; 0,62 ; 0,60 ;0,57 ; 0,55 ; 0,52 ; 0,50 ;0,47 ; 0,45 ; 0,43 ; 0,40 ;0,37 ; 0,35 ; 0,33 ; 0,30 ; 0,27 ; 0,25 ; 0,22 ; 0,20 ; 0,17 ; 0,15 ; 0,12 ; 0,10, 0,07 ; 0,05 0,02.

L'indice de peroxyde précité garantit la faible oxydation ultérieure de la composition du fait des réactions engendrées par les radicaux libres, lesquels sont de toutes façons inévitables. La valeur de l'indice d'anisidine garantit la faible oxydation des lipides et permet d'avoir un profil lipidique (composition en lipide) stable. La Demanderesse a en effet mis en évidence que les lipides présents sont importants à la fois pour la stabilité en vitamine D3 et également pour la biodisponibilité (absorption) de la vitamine D3 et éventuellement des autres constituants pouvant avoir une action pharmaceutique ou biologique.

La teneur en vitamine D3 pour 100g de la composition de l'invention est, quel que soit le mode de réalisation supérieure ou égale à 100μg, 200μg, 250μg, 500μg, 700μg, 900μg, 1000μg, 1200μg, 1300μg, 1500μg, 1700μg ou 1900μg. La concentration en vitamine D3 est quel que soit le mode de réalisation inférieure ou égale à 2500μg ou 2000μg pour 100g de composition.

Selon un premier mode de réalisation préféré, la composition de l'invention contient pour 100g une quantité de vitamine D3 supérieure ou égale à 100µg et inférieure ou égale à 350µg et avantageusement égale à 250µg et présente un indice d'oxydation inférieur à 1,10 et un indice d'anisidine inférieur à 0,5. Dans ce premier mode de réalisation, la quantité de 7-déshydrocholestérol est comprise entre 22mg et 26mg et de préférence égale à 24mg.

Selon un deuxième mode de réalisation préféré, la composition de l'invention contient pour 100g une quantité de vitamine D3 supérieure ou égale à 1500µg et inférieure ou égale à 2500µg ou 2000µg et avantageusement égale à 1700µg et présente un indice d'oxydation inférieur à 1,15 et un indice d'anisidine inférieur à 0,5. Dans ce second mode de réalisation, la quantité de 7-déshydrocholestérol est comprise entre 22mg et 26mg et de préférence égale à 23,8mg.

Selon un troisième mode de réalisation préféré, la composition de l'invention contient pour 100g une quantité de vitamine D3 supérieure ou égale à 1500 et inférieure ou égale à 2500 µg et avantageusement égale à 1700 µg et présente un indice d'oxydation inférieur ou égal à 3,5 et notamment égal à 2,5 et un indice d'anisidine inférieur ou égal à 1,5 et notamment égal à 1,1. Dans ce troisième mode de réalisation, la quantité de 7-déshydrocholestérol est comprise entre 22 mg et 26 mg et de préférence égale à 23.8 mg.

Dans un mode de réalisation combinable à l'un quelconque des modes de réalisation précités, la composition contient au moins 25% en masse d'acides gras polyinsaturés et au moins 40% en masse d'acides gras monoinsaturés. Ces acides gras contenus notamment dans ces proportions participent à la biodisponibilité de la composition de l'invention.

Avantageusement, quel que soit le mode de réalisation de la composition de l'invention, elle peut présenter un rapport en masse cholestérol/phytostérol égal ou supérieur à 135 et égal ou inférieur à 210 et en particulier égale à 173. Ce rapport participe également à la biodisponibilité/absorption de la vitamine D3 notamment.

Avantageusement, dans tous les modes de réalisation, la composition contient en outre de la vitamine A et/ou de la vitamine E et/ou de la vitamine K. Les vitamines A et K sont des antioxydants qui vont contribuer à ralentir l'oxydation de la composition voie à la biodisponibilité de la vitamine D3.

Avantageusement, elle contient au moins 15µg de vitamine E pour 100g de composition et notamment au moins 3,00µg de vitamine K1 pour 100g de composition.

Avantageusement, quel que soit le mode de réalisation, elle présente un rapport massique acide linoléique (oméga 6)/acide alpha-linoléique (oméga 3) égal ou supérieur à 18 et égal ou inférieur à 27,5.

Avantageusement, quel que soit le mode de réalisation, elle contient une quantité de béta sitostérol supérieure ou égale à 270 µg et inférieure ou égale à 420 µg pour 100g de composition. Le béta sitostérol est connu pour lutter contre l'hypercholestérolémie ; il est connu pour présenter des propriétés anticancer et immunomodulantes.

Avantageusement, quel que soit le mode de réalisation, elle contient de l'huile obtenue par extraction à froid de larves de coléoptères choisis notamment parmi *Tenebrio molitor, Alphitobius diaperinus, Tribolium castaneum* et les mélanges d'au moins deux de ces espèces de coléoptères.

La présente invention concerne également un produit choisi parmi les émulsions, les capsules, les liposomes et les colloïdes qui contient la composition de l'invention.

Définitions

Le terme 7-déshydrocholestérol représente le composé de formule 1 suivante :

[formule 1]

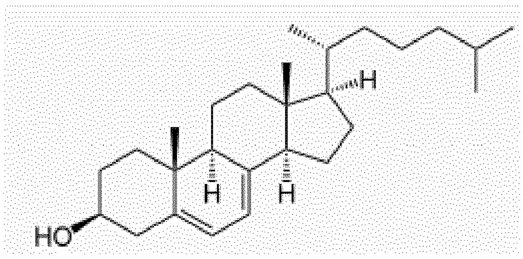

Le terme prévitamine D3 ou provitamine D3 désigne le composé de formule 2 suivante :

[formule 2]

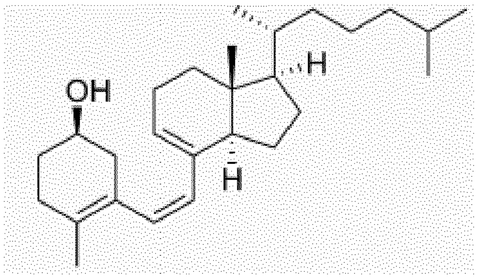

La teneur en provitamine D3 peut être calculée à partir de la teneur en 7-déshydrocholestérol et Vitamine D3 avant et après traitement d'irradiation. La quantité maximale de vitamine D3 pouvant être produite par irradiation est égale à la quantité de 7-déshydroxycholesterol contenu avant irradiation. La quantité de prévitamine D3 correspond à la différence entre la quantité de 7-déshydrocholesterol ayant disparu du fait de l'irradiation et la quantité de vitamine D3 produite par irradiation.

Le terme vitamine D3 désigne le composé de formule 3 suivante :

[formule 3]

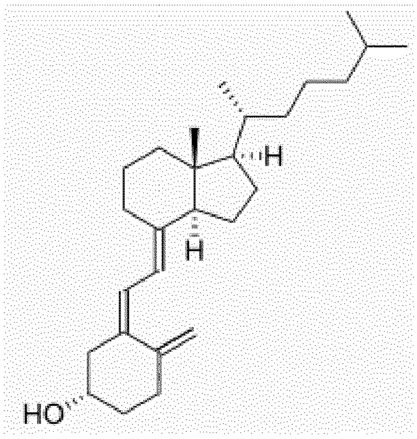

Le terme « alimentaire » indique que la composition peut être ingérée sur une durée donnée par un mammifère choisi par exemple parmi l'humain, le chien, le chat, le cheval, l'âne sans occasionner de troubles majeures ; la composition répond aux conditions réglementaires en vigueur pour l'alimentation animale et/ou humaine, notamment pour ce qui est de l'indice d'oxydation totale.

Les termes « contient une huile de coléoptères » indiquent que la composition de l'invention a la même composition qu'une huile obtenue par exemple, par extraction à froid (centrifugation) de larves de coléoptères mis à part la quantité de vitamine D3 et/ou de 7-déshydrocholestérol et/ou de prévitamine D3 qui diffère(nt) de celle(s) de l'huile de coléoptères.

*Description détaillée - exemples*

Deux exemples de fabrication d'une huile selon l'invention vont maintenant être décrits.

La phase relative aux traitements des larves et à celle de l'extraction de l'huile est la même pour les deux exemples.

Seule la phase de traitement par rayonnement UV diffère.

Traitement des larves

Étape (optionnelle) Jeûne

La phase de jeûne des larves âgées entre 8 et 12 semaines dure 24 heures. Cette étape vise à purger le contenu intestinal des larves. Pour cela, les larves sont placées dans un bac (plastique ou inox). L'épaisseur des larves ne dépasse

pas 1 cm. Elle se déroule à une température comprise entre 16 et 24 °C et une humidité entre 35 et 70%.

Étape (optionnelle) Congélation

Cette étape permet d'étourdir les larves avant l'étape suivante : l'abattage. Elle se déroule à - 18°C pendant 5 minutes. Cette étape n'a pas d'impact spécifique. La procédure d'extraction de l'huile avec ou sans cette étape conduit au même produit final, avec les mêmes valeurs nutritionnelles et les mêmes résultats microbiologiques et toxicologiques.

Étape (optionnelle). Blanchiment

Les larves fraîches sont blanchies dans de l'eau bouillante (100°C) pendant une minute. Extraction de la phase huileuse

Étape 1. Centrifugation

Cette étape consiste à placer les larves entières, blanchies ou déshydratées ou broyées dans une centrifugeuse. Pendant un cycle, le décanteur centrifugeuse est programmée à une force centrifuge donnée pendant 10 min. À l'intérieur du tambour conique rotatif de la centrifugeuse se trouve une bobine qui tourne de quelques tr/min plus lentement, poussant les matériaux solides hors du système et permettant une séparation solide-liquide-liquide : tourteau (solide) + phase liquide huileuse + phase liquide aqueuse. C'est la phase liquide huileuse qui est valorisée dans la suite du process et qui est appelée « huile ».

Étape (optionnelle). Filtration

Après centrifugation et extraction, l'huile est recueillie dans une cuve agréée pour le contact alimentaire en passant par un filtre ce qui permet de filtrer les corps étrangers et résidus solides.

Étape 2. Traitement thermique

L'huile filtrée ainsi obtenue est ensuite soumise à un traitement thermique permettant de chauffer l'huile à 90°C pendant une durée permettant d'assurer la conformité réglementaire de l'huile ; à ce stade l'huile est considérée comme un produit transformé adapté à la consommation humaine ou animale. En particulier, elle ne contient aucune bactérie vivante et ne présente pas un indice d'oxydation (TOTOX) supérieur à 26.

L'huile obtenue contient moins de 0,25$\mu$g de vitamine D3 pour 100g d'huile et environ 24mg de 7-déshydrocholestérol pour 100g d'huile.

Enrichissement en vitamine D3

Étape 3. Exposition aux UV

L'huile de TM transformée est d'abord répartie dans des plateaux inox (GN 1/1 ; 530 x 325 x 20 mm). L'inox ne se dégrade pas sous l'effet des rayons UV. L'huile a une épaisseur d'un cm ce qui représente 1Kg d'huile par plateau. Les plateaux d'1Kg d'huiles de TM sont alors placés sous une néons UV à 21cm pendant 3,45 minutes, pour l'huile 1 qui contient 250 $\mu$g/100g d'huile, et 30 minutes pour l'huile 2 qui contient 1700$\mu$g/100g d'huile dans une pièce spécifique à une température comprise entre 20°C et 25°C et une humidité relative entre 30 et 60%. Des néons UV de 18W (MIGRO UVB 310 avec 75 % UVB et 25 % UVA, pic de spectre à 310 nm). L'intensité de la lumière UV atteint 110$\mu$w/cm$^2$ à 21cm.

Il est également possible d'obtenir la composition de l'invention par irradiation d'une huile obtenue selon le procédé décrit dans le document WO 2018122476 A1.

Étape 4. Centralisation & Homogénéisation

Après exposition aux UV, l'huile de chaque plateau inox est transférée dans une cuve avec couvercle et agréé pour le contact alimentaire. Le contenu de la cuve est ensuite brassé de sorte à homogénéiser l'entièreté de la cuve.

Étape 5. Filtration & Conditionnement

L'huile est filtrée immédiatement après le traitement UV et conditionnée immédiatement en bouteille fermées afin d'éviter tout risque d'oxydation avec l'oxygène de l'air. Pour le conditionnement nous utilisons des flacons opaques à

usage unique, agréés contact alimentaire et adaptés aux volumes souhaités. Une fois la bouteille remplie du volume désiré, la valve du réservoir est fermée et la bouteille est bouchée. Une fois la bouteille fermée, le risque de contamination de l'huile est quasi nul. La durée maximale entre la fin du traitement UV et la fermeture de la bouteille après mise en bouteille est de 60 min.

Étape 6. Stockage

Avant expédition, les bouteilles d'huile sont stockées dans un local spécifique réservé à cet effet. La température ambiante est comprise entre 10 et 20°C et l'humidité est entre 35 et 70%. Cette pièce est conservée dans l'obscurité.

Le tableau 1 ci-dessous regroupe les compositions des deux huiles. Ces deux huiles ont été obtenues par irradiation d'huile de *Tenebrio molitor* commercialisée en tant que produit alimentaire.

[Tableau 1]

| | | Huile 1 | Huile 2 |
|---|---|---|---|
| Valeurs moyennes (pour 100g d'huile de TM) | Vitamines | | |
| | Vitamine D3 | 250µg/100g | 1700µg/100g |
| | Vitamine A | <21µg | |
| | Vitamine E | 19,37 µg | |
| | Vitamine K1 | 3,56 µg | |
| | Choline | < 10 mg | |
| | Matière grasse | | |
| | AG saturés | 22,91 g | |
| | AG monoinsaturés | 48,96 g | |
| | AG poly-insaturés | 27,83 g | |
| | Trans | < 0,32 g | |
| | Acide linolénique (w3) | 1,16 g | |
| | Acide linoléique (w6) | 26,55 g | |
| | Acide oléique | 46,28 g | |
| | Stérols | | |
| | 7-DHC | 24mg/ 23,8mg | |
| | Phytostérols | 1760 µg | |
| | Brassicastérol | 1260 µg | |
| | Campestérol | 156 µg | |
| | B-Sitostérol | 344 µg | |
| | Cholestérol | 304 mg | |
| | Squalène | 60,8 µg | |
| | Co-Enzymes | | |
| | Ubiquinol / Co-Q10 | < 0,5 mg | |
| | Autres composants | | |
| | Fibres | < 3 g | |
| | Cendres | < 0,3 g | |
| | Polyphénols | < 10 mg | |
| | Indice de peroxyde meq$O_2$/kg fat | 1,10 / 1,15 | |
| | p-anisidine | <0,5/<0,5 | |
| | Indice Totox | <2,7/<2,8 | |

L'indice de peroxyde (IP). Cet indice permet d'évaluer le degré d'oxydation des acides gras insaturés de la

matière grasse. Cet indice est un indicateur de début d'oxydation. Les peroxydes se forment à partir des radicaux libres qui se créent dans la phase d'initiation de la réaction d'oxydation. L'indice de peroxyde est déterminé selon la norme NF EN ISO 660 par titrimétrie. Il se mesure en meq$O_2$ par kilogramme de composition.

L'indice d'anisidine (IA). Cet indice correspond à la mesure des produits d'oxydation secondaires des matières grasses. Cet indice mesure la quantité d'aldéhydes (principalement des aldéhydes $\alpha$, $\beta$-insaturés). L'indice d'anisidine est mesuré par spectrophotométrie selon la norme ISO 6885:2016.

L'indice TOTOX (TOTal OXydation) qui est une mesure de l'oxydation de l'huile à partir de l'indice de peroxyde et de l'indice d'anisidine. Indice TOTOX = (2 x IP) + IA. Un produit est considéré comme nocif si l'indice TOTOX est supérieur à 26.

Les stérols dont le 7-DHC qui est le précurseur de la vitamine D3 sont quantifiés par chromatographie en phase gaz avec un détecteur d'ionisation de flame (GC-FID (T-AA08-WO3638)).

Le profil lipidique est déterminé selon par chromatographie en phase gaz avec un détecteur d'ionisation de flame (GC-FID (T-AA08-WO3638)).

La vitamine D3 est quantifiée par chromatographie en phase liquide avec détection par photodiode (EN 12821:2009, LC-DADLC-DAD).

La vitamine E est quantifiée par chromatographie en phase liquide avec détection de fluorescence (EN 12822:2014, LC-FLD).

Les fibres sont quantifiées par gravimétrie enzymatique (COFRAC test 1-0287).

Les autres constituants sont quantifiés par les méthodes usuelles.

Données biologiques

Mesure de l'absorption

PROTOCOLE EXPERIMENTAL

Etape 1 : Expérimentation animale

Au terme d'une période d'acclimatation, 3 groupes de rats mâles adultes de souche Wistar ont été soumis à une dérivation du canal lymphatique (6 à 8 rats par groupe) puis intubés avec différentes huiles :

- L'huile d'insectes TM (25 $\mu$g/ml de vitamine D3 (référencée dans ce rapport "Huile TM")
- Vitamine D3 de Lichen (commercialisée par la société D.plantes Laboratoire diluée dans une huile de colza vierge de sorte à atteindre une concentration finale en vitamine D3 (25 $\mu$g/ml) (référencée dans ce rapport "VitD3 Lichen")
- Vitamine D3 de Lanoline (commercialisée par D.plantes Laboratoire) diluée dans une huile de colza vierge de sorte à atteindre une concentration finale en vitamine D3 à (25 $\mu$g/ml) (référencée dans ce rapport "VitD3 Lanoline")

Les différentes huiles ont été administrées par intubation gastrique, de sorte à apporter un équivalent de 50 $\mu$g de vitamine D3 /rat. Les souris des 3 groupes ont reçu la même quantité de vitamine D3 et d'huile.

Un 4ème groupe contrôle de 3 animaux intubés avec du sérum physiologique a également été soumis à une dérivation du canal lymphatique. Ce groupe servira de référence en termes de composition et teneur en acides gras et vitamine D d'une lymphe à jeun.

Pour chaque groupe d'animaux, la lymphe a été recueillie sur 6 heures, afin de déterminer sa concentration en vitamine D3 en fonction de l'huile ingérée.

Etape 2 : Absorption intestinale de la vitamine D3

La teneur lymphatique en cholécalciférol a été déterminée par chromatographie liquide haute performance équipée d'un détecteur UV à barrette de diode.

Le taux d'absorption intestinale (T) de la vitamine D a été calculé comparativement à une référence dont le taux d'absorption est de 100% :

$$T = (RL / RH) \times 100$$

Avec :

RL = quantité de vitamine D dans la Lymphe / quantité de référence dans la Lymphe

RH = quantité de vitamine D dans la formule ingérée / quantité de référence dans la formule ingérée.

RESULTATS

Pour chaque groupe d'animaux, la concentration lymphatique en vitamine D3 a été déterminée. Les résultats sont regroupés dans le Tableau 2.
Comme attendu, chez les animaux témoins n'ayant pas reçu de vitamine D3, la lymphe est dépourvue de vitamine D3.

[Tableau 2]

| Groupe | VitD3 lymphe (ng/ml/μg de vitD3 ingérée) |
|---|---|
| Huile TM (n=6) | 4.3 [a] ±1.4 |
| Huile « VitD3-lichen » (N=8) ** | 2.1 [b] ±1.3 |
| Huile « VitD3-lanoline » (N=8) ** | 1.3 [b] ±0.7 |
| Groupe contrôle (Sans vitamine D3 ; N=3) | n.d.* |
| *Les moyennes marquées de lettres différentes sont significativement différentes (p<0. 05), ANOVA monovariée suivie d'un test de HSD de Tukey*<br>**nd = non détectable*<br>***Vitamine D3 de Lichen ou de Lanoline, diluée dans une huile de colza vierge* | |

On constate une meilleure absorption de la vitamine D3 contenue dans l'huile de l'invention.

Conservation

Le Tableau 3 suivant regroupe les résultats de conservation des huiles précitées (composition huileuse de l'invention (TM), composition huileuse contenant de la vitamine D3 extraite du lichen et composition huileuse contenant de la vitamine D3 extraite de la lanoline).
Les conditions de conservation sont les suivantes : Température : 4°C à l'obscurité, humidité : entre 50 et 70 %

[Tableau 3]

| | D3 T=0 (% T0) | D3 T=1M (%T0) |
|---|---|---|
| D3 TM | 100 | 100 |
| D3 lichen | 100 | 72.72727273 |
| D3 lanoline | 100 | 85.95744681 |

On constate au vu du Tableau 3 que la composition huileuse de l'invention contient la même quantité de vitamine D3 même après un mois de conservation dans les conditions précitées, ce qui n'est pas le cas des deux autres compositions huileuses.

## Revendications

1. Composition huileuse alimentaire contenant de la vitamine D3, du 7-déshydrocholestérol et de la provitamine D3, **caractérisée en ce qu'**elle contient une masse de 7-déshydrocholestérol pour 100g de composition égale ou supérieure à 5mg ; 10mg, 15 mg, 20mg ; 21mg ; 22mg ; 23mg ; 23,5mg, 24mg, 24,5mg, 25mg.

2. Composition selon la revendication 1, **caractérisée en ce qu'**elle présente un indice de peroxyde inférieur à 4, en particulier inférieur ou égal à 2,5 ; 2,4 ; 2,3 ; 2,2 ; 2,1 ;2 ;1,9 ; 1,8 ; 1,7 ; 1,6 ; 1,5 ; 1,4 ; 1,3 ; 1,2 ; 1,15, ou 1,10 et/ou un indice d'anisidine inférieur ou égal à 1,1 ; 1,07 ; 1,05 ; 1,02 ; 1,00 ; 0,97 ; 0,95 ; 0,90 ; 0,87 ; 0,85 ; 0,82 ; 0,80 ; 0,77 ; 0,75 ; 0,72 ; 0,70 ; 0,67 ; 0,65 ; 0,62 ; 0,60 ;0,57 ; 0,55 ; 0,52 ; 0,50 ;0,47 ; 0,45 ; 0,43 ; 0,40 ;0,37 ; 0,35 ; 0,33 ; 0,30 ; 0,27 ; 0,25 ; 0,22 ; 0,20 ; 0,17 ; 0,15 ; 0,12 ; 0,10, 0,07 ; 0,05 0,02.

3. Composition selon la revendication 1 ou 2, **caractérisée en ce qu'**elle contient une quantité de vitamine D3 pour 100g de composition égale ou supérieure à 100μg ; 200μg, 250μg, 500μg, 700μg, 900μg, 1000μg, 1200μg, 1300μg, 1500μg, 1700μg ou 1900μg.

4. Composition selon l'une quelconque des revendications précédentes, **caractérisée en ce qu'**elle contient au moins 25% en masse d'acides gras polyinsaturés et au moins 40% en masse d'acides gras monoinsaturés.

5. Composition selon l'une quelconque des revendications précédentes, **caractérisée en ce qu'**elle présente un rapport en masse cholestérol/phytostérol égal ou supérieur à 135 et égal ou inférieur à 210 et en particulier égale à 173.

6. Composition selon l'une quelconque des revendications précédentes, **caractérisée en ce qu'**elle contient en outre de la vitamine A et/ou de la vitamine E et/ou de la vitamine K.

7. Composition selon la revendication 7, **caractérisée en ce qu'**elle contient au moins 15μg de vitamine E pour 100g de composition et notamment au moins 3,00μg de vitamine K1 pour 100g de composition.

8. Composition selon l'une quelconque des revendications précédentes, **caractérisée en ce qu'**elle présente un rapport massique acide linoléique (oméga 6)/acide alpha-linoléique (oméga 3) égal ou supérieur à 18 et égal ou inférieur à 27,5.

9. Composition selon l'une quelconque des revendications précédentes, **caractérisée en ce qu'**elle contient une quantité de béta sitostérol supérieure ou égale à 270 μg et inférieure ou égale à 420 μg pour 100g de composition.

10. Composition selon l'une quelconque des revendications précédentes, **caractérisée en ce qu'**elle contient de l'huile obtenue pas extraction à froid de larves de coléoptères choisis notamment parmi *Tenebrio molitor, Alphitobius diaperinus, Tribolium castaneum* et les mélanges d'au moins deux de ces espèces de coléoptères.

11. Produit choisi parmi les émulsions, les capsules, les liposomes et les colloïdes, **caractérisé en ce qu'**il contient la composition selon l'une quelconque des revendications précédentes.

**Patentansprüche**

1. Essbare Ölzusammensetzung, die Vitamin D3, 7-Dehydrocholesterol und Prävitamin D3 enthält, **dadurch gekennzeichnet, dass** sie eine Masse an 7-Dehydrocholesterol pro 100 g Zusammensetzung enthält, die gleich oder größer ist als 5 mg; 10 mg; 15 mg; 20 mg; 21 mg; 22 mg; 23 mg; 23,5 mg; 24 mg; 24,5 mg; 25 mg.

2. Zusammensetzung nach Anspruch 1, **dadurch gekennzeichnet, dass** sie einen Peroxidwert von weniger als 4, insbesondere weniger als oder gleich 2,5; 2,4; 2,3; 2,2; 2,1; 2; 1,9; 1,8; 1,7; 1,6; 1,5; 1,4; 1,3; 1,2; 1,15 oder 1,10 und/oder einen Anisidinwert von weniger als oder gleich 1,1; 1,07; 1,05; 1,02; 1,00; 0,97; 0,95; 0,90; 0,87; 0,85; 0,82; 0,80; 0,77; 0,75; 0,72; 0,70; 0,67; 0,65; 0,62; 0,60; 0,57; 0,55; 0,52; 0,50; 0,47; 0,45; 0,43; 0,40; 0,37; 0,35; 0,33; 0,30; 0,27; 0,25; 0,22; 0,20; 0,17; 0,15; 0,12; 0,10; 0,07; 0,05; 0,02.

3. Zusammensetzung gemäß Anspruch 1 oder 2, **dadurch gekennzeichnet, dass** sie eine Menge an Vitamin D3 pro 100 g Zusammensetzung enthält, die gleich oder größer als 100 μg, 200 μg, 250 μg, 500 μg, 700 μg, 900 μg, 1000 μg, 1200 μg, 1300 μg, 1500 μg, 1700 μg oder 1900 μg enthält.

4. Zusammensetzung nach einem der vorstehenden Ansprüche, **dadurch gekennzeichnet, dass** sie mindestens 25 Massenprozent mehrfach ungesättigte Fettsäuren und mindestens 40 Massenprozent einfach ungesättigte Fettsäuren enthält.

5. Zusammensetzung nach einem der vorstehenden Ansprüche, **dadurch gekennzeichnet, dass** sie ein Massenverhältnis von Cholesterin zu Phytosterin von mindestens 135 und mindestens 210, insbesondere von 173, aufweist.

6. Zusammensetzung nach einem der vorstehenden Ansprüche, **dadurch gekennzeichnet, dass** sie außerdem Vitamin A und/oder Vitamin E und/oder Vitamin K enthält.

7. Zusammensetzung nach Anspruch 7, **dadurch gekennzeichnet, dass** sie mindestens 15 µg Vitamin E pro 100 g Zusammensetzung und insbesondere mindestens 3,00 µg Vitamin K1 pro 100 g Zusammensetzung enthält.

8. Zusammensetzung nach einem der vorstehenden Ansprüche, **dadurch gekennzeichnet, dass** sie ein Massenverhältnis von Linolsäure (Omega 6) zu Alpha-Linolensäure (Omega 3) von mindestens 18 und höchstens 27,5 aufweist.

9. Zusammensetzung nach einem der vorstehenden Ansprüche, **dadurch gekennzeichnet, dass** sie eine Menge an Beta-Sitosterol von größer oder gleich 270 µg und kleiner oder gleich 420 µg pro 100 g Zusammensetzung enthält.

10. Zusammensetzung nach einem der vorstehenden Ansprüche, **dadurch gekennzeichnet, dass** sie Öl enthält, das durch Kaltpressung aus Käferlarven gewonnen wird, die insbesondere aus *Tenebrio molitor, Alphitobius diaperinus, Tribolium castaneum* und Mischungen aus mindestens zwei dieser Käferarten ausgewählt sind.

11. Produkt, ausgewählt aus Emulsionen, Kapseln, Liposomen und Kolloiden, **dadurch gekennzeichnet, dass** es die Zusammensetzung gemäß einem der vorstehenden Ansprüche enthält.

## Claims

1. Edible oil composition containing vitamin D3, 7-dehydrocholesterol and previtamin D3, **characterized in that** it contains a mass of 7-dehydrocholesterol per 100 g of composition equal to or greater than 5 mg; 10 mg; 15 mg; 20 mg; 21 mg; 22 mg; 23 mg; 23.5 mg; 24 mg; 24.5 mg; 25 mg.

2. Composition according to Claim 1, **characterized in that** it has a peroxide value of less than 4, in particular less than or equal to 2.5; 2.4; 2.3; 2.2; 2.1; 2; 1.9; 1.8; 1.7; 1.6; 1.5; 1.4; 1.3; 1.2; 1.15, or 1.10 and/or an anisidine value of less than or equal to 1.1; 1.07; 1.05; 1.02; 1.00; 0.97; 0.95; 0.90; 0.87; 0.85; 0.82; 0.80; 0.77; 0.75; 0.72; 0.70; 0.67; 0.65; 0.62; 0.60; 0,57; 0.55; 0.52; 0.50; 0.47; 0.45; 0.43; 0.40; 0.37; 0.35; 0.33; 0.30; 0.27; 0.25; 0.22; 0.20; 0.17; 0.15; 0.12; 0.10; 0.07; 0.05; 0.02.

3. Composition according to Claim 1 or 2, **characterized in that** it contains a quantity of vitamin D3 per 100 g of composition equal to or greater than 100 µg, 200 µg, 250 µg, 500 µg, 700 µg, 900 µg, 1000 µg, 1200 µg, 1300 µg, 1500 µg, 1700 µg or 1900 µg.

4. Composition according to one of the preceding claims, **characterized in that** it contains at least 25% by mass of polyunsaturated fatty acids and at least 40% by mass of monounsaturated fatty acids.

5. Composition according to any one of the preceding claims, **characterized in that** it has a cholesterol/phytosterol mass ratio equal to or greater than 135 and equal to or greater than 210 and in particular equal to 173.

6. Composition according to any one of the preceding claims, **characterized in that** it also contains vitamin A and/or vitamin E and/or vitamin K.

7. Composition according to Claim 7, **characterized in that** it contains at least 15 µg of vitamin E per 100 g of composition and in particular at least 3.00 µg of vitamin K1 per 100 g of composition.

8. Composition according to any one of the preceding claims, **characterized in that** it has a linoleic acid (omega 6)/alpha-lineolenic acid (omega 3) mass ratio equal to or greater than 18 and equal to or less than 27.5.

9. Composition according to any one of the preceding claims, **characterized in that** it contains a quantity of beta-sitosterol greater than or equal to 270 µg and less than or equal to 420 µg per 100 g of composition.

10. Composition according to any one of the preceding claims, **characterized in that** it contains oil obtained by cold extraction from beetle larvae chosen in particular from *Tenebrio molitor, Alphitobius diaperinus, Tribolium castaneum* and mixtures of at least two of these beetle species.

11. Product chosen from emulsions, capsules, liposomes and colloids, **characterized in that** it contains the composition according to any one of the preceding claims.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2021191510 A1
- WO 03059358 A1
- WO 2018122476 A1